# EUROPÄISCHE PATENTSCHRIFT

(11) **EP 2 129 612 B1**
(45) Veröffentlichungstag und Bekanntmachung des Hinweises auf die Patenterteilung: **16.10.2013**
(21) Anmeldenummer: 08715730.1
(22) Anmeldetag: 12.02.2008
(51) Int. Cl.: B67C 3/00, B67C 3/20, B67C 3/26, B67C 3/28, B67C 3/04, G01G 17/06

(54) **FREISTRAHLFÜLLSYSTEM MIT WÄGEEINHEIT**
FREE-FLOW FILLING SYSTEM WITH WEIGHING CELL
SYSTÈME DE REMPLISSAGE À JET LIBRE DOTÉ D'UNE UNITÉ DE PESAGE

(30) Priorität: 23.03.2007 DE 102007014639
(43) Veröffentlichungstag der Anmeldung: 09.12.2009
(73) Patentinhaber: KHS GmbH, 44143 Dortmund (DE)
(72) Erfinder: CLÜSSERATH, Ludwig, 55543 Bad Kreuznach (DE); KRULITSCH, Dieter-Rudolf, 55545 Bad Kreuznach (DE); HÄRTEL, Manfred, 55559 Bretzenheim (DE)
(86) Internationale Anmeldenummer: PCT/EP2008/001035
(87) Internationale Veröffentlichungsnummer: WO 2008/116526

(56) Entgegenhaltungen:
- EP-A- 1 072 511
- EP-A- 1 731 478

## Beschreibung

Die Erfindung bezieht sich auf ein Füllsystem für die Heißabfüllung eines flüssigen Füllgutes in Flaschen oder dergleichen Behälter gemäß Oberbegriff Patentanspruch 1 und wie aus der EP 1 731 478 A1 bekannt.

Verfahren sowie Füllsysteme für die Heißabfüllung, d.h. insbesondere auch für ein heiß-steriles Abfüllen von Getränken, wie z.B. Säften usw. sind bekannt. Zur Sicherstellung der Haltbarkeit des hergestellten Produktes ist es u.a. erforderlich, dass das Füllgut mit ausreichend hoher Temperatur in den jeweiligen Behälter eingebracht wird und beim Füllen insbesondere auch eine Kontamination mit Keimen oder Mikroorganismen, wie Bakterien, Pilzen usw. vermieden wird.

Weiterhin sind im Stand der Technik Füllverfahren und entsprechende Vorrichtungen bekannt, bei denen die Menge des in den zu befüllenden Behälter gelangten Füllgutes durch Wiegen bestimmt wird, wobei das Wiegen des Behälters kontinuierlich während des Füllens erfolgt.

Eine solche Vorrichtung wurde beispielsweise durch die EP 1 731 478 A1 vorgestellt. Diese Schrift zeigt eine Vorrichtung, bei welcher die Behälter während des Füllvorganges mit ihrem Boden auf jeweils einer Aufnahmefläche aufstehen. Die zur Wägung erforderlichen Wägezellen sind innerhalb dieser Aufnahmefläche angeordnet. Nachteilig an dieser Vorrichtung ist, dass eventuelle Verschmutzungen der Aufnahmeflächen mitgewogen werden, was unter ungünstigen Umständen zu einer Verfälschung der Messergebnisse führen kann.

Ebenfalls bekannt wurde eine Vorrichtung nach der EP 1 072 511 A1. Diese Schrift zeigt eine Vorrichtung, bei welcher die Wägezellen vor mechanischen Einflüssen geschützt im Inneren des umlaufenden Kreisels eine Behälterfüllmaschine angeordnet sind. Nachteilig an dieser Vorrichtung ist, dass ein Austausch der Wägezelle bei eventuellen Beschädigungen mit einem hohen Montageaufwand und somit auch mit langen Produktionsunterbrechungen verbunden ist.

Aufgabe der Erfindung ist es, ein Füllsystem aufzuzeigen, welches eine Heißabfüllung mit hoher Qualität, insbesondere auch mit hoher Haltbarkeit des hergestellten Produktes, d.h. der mit dem Füllgut gefüllten und verschlossenen Behälter gewährleistet. Zur Lösung dieser Aufgabe ist ein Füllsystem entsprechend dem Patentanspruch 1 ausgebildet.

Eine Besonderheit des erfindungsgemäßen Füllsystems besteht darin, dass die Füllmengensteuerung unter Verwendung wenigstens einer Wägezelle oder Wägeeinheit erfolgt, also unter Verwendung von Mitteln, die zu keiner Zeit mit dem flüssigen Füllgut oder dem Innenraum der Behälter in Kontakt stehen und deren ordnungsgemäße Funktionsweise auch keine Einschränkung hinsichtlich der Art und/oder Temperatur des Füllgutes erforderlich macht.

Bei einer bevorzugten Ausführungsform der Erfindung bilden das jeweilige Füllelement, der zugehörige Behälterträger und die Wägeeinheit, beispielsweise zusammen mit einem Verschließelement (z.B. Verschließplatte) zum Verschließen des Füllelementes für eine Reinigung, insbesondere CIP-Reinigung, eine komplette Baueinheit, die sehr kompakt ausgebildet werden kann und als Ganzes an einem Rotor, beispielsweise an einem Kessel einer Füllmaschine montierbar und im Bedarfsfalle, beispielsweise bei einer Reparatur oder Wartung als Ganzes demontierbar ist.

Bei einer weiteren bevorzugten Ausführungsform ist das Füllsystem als Freistrahlfüllsystem ausgebildet, bei dem die Behälter auch während des Füllens mit ihrer Behälteröffnung vom Füllelement bzw. von der Mündung oder Abgabeöffnung des Füllelementes beabstandet sind, sodass es auch nicht zu einer Kontaminierung des abgefüllten Füllgutes kommen kann, die aus einer Berührung zwischen den Behältern und dem Füllelement resultiert.

Bei einer weiteren bevorzugten Ausführungsform der Erfindung erfolgt durch Umwälzen des im Kessel des Füllsystems bereitgestellten Füllgutes in einem eine Heizeinrichtung aufweisenden Kreislauf ein Warm- bzw. Heißhalten des Füllgutes. Hierbei ist es insbesondere auch möglich, dass jeweilige Füllelement in diesen Kreislauf einzubeziehen, sodass zugleich auch ein Erwärmen bzw. Warmhalten des Füllelementes erreicht ist.

Grundsätzlich besteht auch die Möglichkeit, das Füllelement durch Beaufschlagung mit einem heißen gas- und/oder dampfförmigen Medium zu erwärmen bzw. warm zu halten, sodass eine Abkühlung des Füllgutes während des Füllens beim Durchströmen des Füllelementes wirksam vermieden ist.

Als heißes Medium kann beispielsweise auch das Füllgut selbst dienen, welches in einem eine Heizeinrichtung und beispielsweise auch den Kessel der Füllmaschine einschließenden Kreislauf einen Kanal des jeweiligen Füllelementes, beispielsweise wenigstens einen Abschnitt des Flüssigkeitskanales des Füllelementes durchströmt, und zwar bei geschlossenem Füllventil. Durch eine Steuerventileinrichtung, die bei einer Füllmaschine mit mehreren Füllelementen für die Füllelemente jeweils gesondert, bevorzugt aber für eine Gruppe von mehreren Füllelementen oder für sämtliche Füllelemente der Füllmaschine gemeinsam vorgesehen ist, ist das die Füllelemente beheizende heiße Medium steuerbar, und zwar beispielsweise derart, dass der Fluss des heißen Füllgutes zum Beheizen der Füllelemente dann aktiviert wird, wenn deren Flüssigkeitsventile geschlossen sind, z.B. bei einer Unterbrechung des Füllprozesses.

Durch eine kleine, kompakte Bauform des Füllelementes, die (Bauform) insbesondere durch spezielle Ausbildung und Anordnung des Flüssigkeitsventils erreichbar ist, ergibt sich für das Füllelement bzw. dessen Gehäuse eine geringe Masse bei ebenfalls geringer Außenfläche. Hierdurch ist ein schnelles Aufwärmen des Füllelementes erreichbar sowie eine übermäßige Wärmeabstrahlung vom Füllelement an die Umgebung verhindert.

Weiterbildungen, Vorteile und Anwendungsmöglichkeiten der Erfindung ergeben sich aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

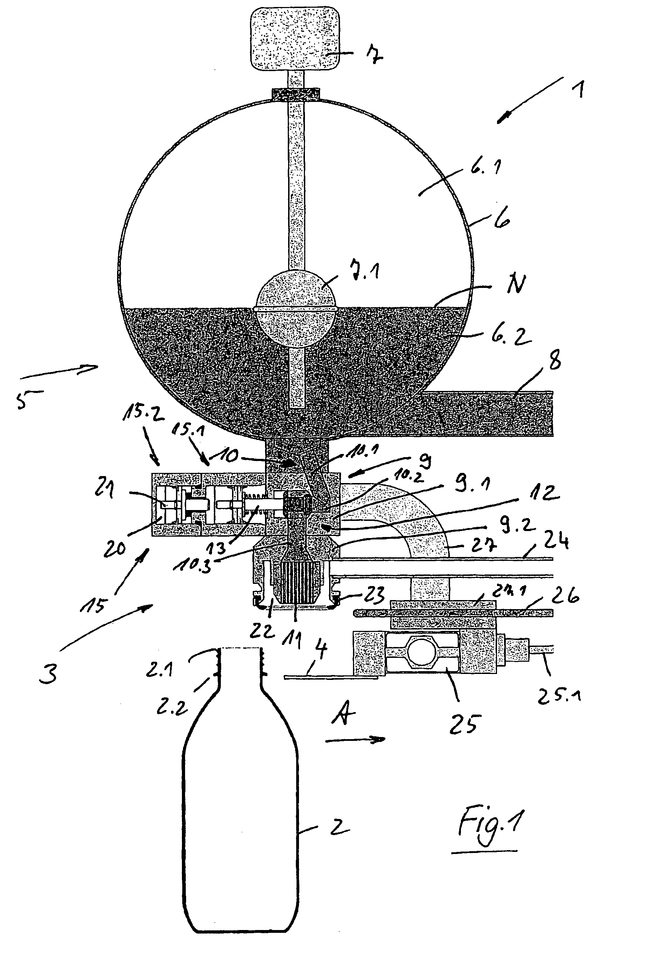

Die Erfindung wird im Folgenden anhand der Figuren 1 - 9, die jeweils in vereinfachter Darstellung ein Füllsystem gemäß der Erfindung in verschiedenen Betriebszuständen und/oder Ausführungsformen zeigen, näher erläutert.

Das in den Figuren 1 - 6 allgemein mit 1 bezeichnete Füllsystem ist Bestandteil einer Füllmaschine umlaufender Bauart zum Abfüllen, insbesondere zum Heißabfüllen eines flüssigen Füllgutes in Flaschen 2. Das Füllsystem 1 besteht hierfür im Wesentlichen aus einem Füllelement 3 und aus einem diesem Füllelement 3 zugeordneten Flaschen- oder Behälterträger 4, der bei der dargestellten Ausführungsform zum Halten der Flaschen 2 an einem unterhalb der Flaschenmündung 2.1 gebildeten Mündungsflansch 2.2 dient und hierfür beispielsweise gabelartig ausgebildet ist. Das Füllelement 3 und der zugehörige Behälterträger 4 sind mit einer Vielzahl gleichartiger Füllelemente 3 und Behälterträger 4 am Umfang eines um eine vertikale Maschinenachse umlaufend antreibbaren Rotors 5 der Füllmaschine vorgesehen. Oberhalb der Füllelemente 3 befindet sich am Rotor 5 ein für sämtliche Füllelemente 3 gemeinsamer Kessel 6, der während des Füllbetriebes bis zu einem vorgegebenem Niveau N mit dem flüssigen Füllgut gefüllt ist, und zwar niveaugeregelt durch eine entsprechende Sensoreinrichtung, die bei der dargestellten Ausführungsform von einem Füllstandsensor 7 mit Schwimmer 7.1 gebildet ist. Im Kessel 6 sind somit ein Gasraum 6.1 und ein Flüssigkeitsraum 6.2 gebildet. Das flüssige Füllgut wird dem Kessel 6 über eine Versorgungsleitung 8 gesteuert zugeführt.

In einem Gehäuse 9 des an die Unterseite des Kessels 6 angeschlossenen Füllelementes 3 ist ein Flüssigkeitskanal 10 mit mehreren Kanalabschnitten 10.1, 10.2 und 10.3 ausgebildet. Der Flüssigkeitskanal 10 ist an der Oberseite des Füllelementes 3 mit dem vom Füllgut eingenommenen Raum 6.2 verbunden. An der Unterseite des Füllelementes 3 bzw. an einer dort vorgesehenen Gassperre 11 bildet der Flüssigkeitskanal 10 eine eine Vielzahl von Einzelöffnungen aufweisende Mündung, über die das flüssige Füllgut während des Füllens in die jeweilige Flasche 2 eingebracht wird, wie dies nachstehend noch näher beschrieben wird. Die Gassperre 11 ist bei der dargestellten Ausführungsform ein Körper oder Einsatz, der eine Vielzahl von parallelen Kanälen bildet, die jeweils mit dem Kanalabschnitt 10.3 in Verbindung stehen und am unteren Ende eine Einzelöffnung bilden.

Im Flüssigkeitskanal 10 ist weiterhin ein Flüssigkeitsventil 12 vorgesehen, welches in der nachstehend noch näher beschriebenen Weise während des Füllprozesses gesteuert geöffnet und geschlossen wird und im Wesentlichen aus einem am Ende eines Ventilstößels 13 vorgesehenen Ventilkörper 14 sowie aus einer Betätigungseinrichtung 15 besteht, mit der zum gesteuerten Öffnen und Schließen des Flüssigkeitsventils 12 der Stößel 13 und der Ventilkörper 14 axial bewegbar sind und die sich bei der dargestellten Ausführungsform an der der vertikalen Maschinenachse abgewandten, d.h. radial außenliegenden Seite des Gehäuses 9 befindet. Bei der dargestellten Ausführungsform ist der Ventilstößel 13 mit seiner Längserstreckung radial zur vertikalen Maschinenachse der Füllmaschine orientiert.

Zum Schließen des Flüssigkeitsventils 12 wird der Ventilstößel 13 durch die Betätigungseinrichtung 15 bezogen auf die vertikale Maschinenachse radial nach innen und zum Öffnen des Flüssigkeitsventils 12 radial nach außen bewegt. In der geschlossenen Stellung des Flüssigkeitsventils liegt der Ventilkörper 14 gegen eine im Flüssigkeitskanal ausgebildeten Ventilsitz 16 an. Im geöffneten Zustand ist der Ventilkörper 14 von diesem Ventilsitz 17 beabstandet.

Der Flüssigkeitskanal 10 bildet bei der dargestellten Ausführungsform im Wesentlichen drei Abschnitte, nämlich den mit dem Flüssigkeitsraum 6.2 des Kessels 6 in Verbindung stehenden schräg verlaufenden Abschnitt 10.1, den sich daran anschließenden den Ventilsitz 16 aufweisenden zylinderartigen Abschnitt 10.2 sowie den vertikalen, in Strömungsrichtung des Füllgutes auf das Flüssigkeitsventil 12 folgenden Abschnitt 10.3, an dessen Ende die Gassperre 11 vorgesehen ist. In dem zylinderförmigen Abschnitt 10.2 ist das Flüssigkeitsventil 12 vorgesehen. Am Ventilstößel 13 ist weiterhin ein kolbenartiger Abschnitt 17 vorgesehen, der den Flüssigkeitskanalabschnitt 10.2 zu seinem dem Betätigungselement 15 benachbarten Ende abgedichtet abschließt.

Wie nachstehend noch beschrieben wird, weist das Flüssigkeitsventil 12 zwei unterschiedliche Öffnungszustände auf, und zwar einen Öffnungszustände, in dem das Flüssigkeitsventil 12 vollständig geöffnet ist, d.h. der Ventilkörper 14 dem maximalen Abstand vom Ventilsitz 16 besitzt, sowie einen Zustand, in dem das Flüssigkeitsventil 12 reduziert, d.h. mit reduziertem Öffnungsquerschnitt geöffnet ist und der Ventilkörper 14 einen reduzierten Abstand vom Ventilsitz 16 aufweist. Für diesen Zweck besteht die Betätigungseinrichtung 15 aus zwei, bei der dargestellten Ausführungsform jeweils als Pneumatikzylinder ausgebildeten Betätigungselementen 15.1 und 15.2. Das Betätigungselement 15.1 weist einen Zylinderraum 18 auf, der durch einen auf dem Ventilstößel 13 vorgesehenen Kolben begrenzt ist und zum Schließen des Flüssigkeitsventils 12 gegen die Wirkung einer Druckfeder bzw. Ventilöffnungsfeder 19 mit Druckluft beaufschlagt wird. Das Betätigungselement 15.2 bildet einen Zylinderraum 20, der von einem auf einem Stößel 21 angeordneten Kolben begrenzt ist. Der achsgleich mit dem Ventilstößel 13 angeordnete Stößel 21 bildet mit seinem in den Zylinderraum 18 hineinreichenden Ende einen verstellbaren Anschlag für das dortige Ende des Ventilstößels 13, so dass bei fehlendem Druck in den Zylinderräumen 18 und 20 durch die Ventilöffnungsfeder 19 eine vollständige Öffnung des Flüssigkeitsventil 12, bei Druckbeaufschlagung des Zylinderraumes 20 durch den gegen den Ventilstößel 13 anliegenden Stößel 21 eine reduzierte Öffnung des Flüssigkeitsventils 12 und bei Druckbeaufschlagung des Zylinderraumes 18 ein Schließen des Flüssigkeitsventils 12 erreicht werden.

Bei der dargestellten Ausführungsform ist das Gehäuse 9 mehrteilig ausgebildet, und zwar u.a. bestehend aus einem Gehäuseteil 9.1, in welchem das Flüssigkeitsventil 12 vorgesehen ist und aus einem das untere Ende des Füllelementes 3 bildenden glockenartigen Gehäuseteil 9.2, dessen Innenraum 22 zur Unterseite des Füllelementes 3 bzw. zum Behälterträger 4 hin offen ist. In dem Innenraum 22 ist die von einem beispielsweise austauschbaren Einsatz gebildete Gassperre 11 angeordnet, und zwar derart, dass diese Gassperre 11 nicht über die von einer ringförmigen Lippendichtung 23 begrenzte Öffnung des Innenraumes 2 vorsteht. In den Innenraum 22 mündet eine Leitung 24, die wie nachstehend noch näher beschrieben für unterschiedliche Funktionen dient.

Der unterhalb des Füllelementes 3 und damit auch unterhalb der Öffnung des Innenraumes 22 angeordnete Behälterträger 4 ist an einer Wägezelle bzw. Wägeeinheit 25 gehalten, die für jedes Füllsystem 1 bzw. jeden Behälterträger 4 gesondert vorgesehen ist und an einer Messleitung 25.1 ein von der Masse bzw. dem Gewicht der jeweiligen am Behälterträger 4 angeordneten Flasche 2 abhängiges Messsignal liefert. Die Wägeeinheit 25 enthält als signalgebendes Element beispielsweise wenigstens einen Dehnungsmessstreifen oder ein anderes elektrisches Bauteil, dessen elektrische Eigenschaften sich in Abhängigkeit von einer auf dieses Bauteil ausgeübten Belastung, beispielsweise Biegung ändern. Die Wägeeinheit 25 sowie auch ein bei der dargestellten Ausführungsform plattenförmiges Verschließelement 26 (Spülplatte), mit welchem für eine CIP-Reinigung des Füllsystems 1 bzw. der Füllmaschine die Öffnung des Innenraumes 22 dicht verschlossen werden kann, sind an einem mit dem Gehäuseteil 9.1 befestigten Tragarm oder Tragelement 27 gehalten. Das Verschließelement 26 ist bei der dargestellten Ausführungsform in einer Führung des Tragarmabschnittes 27.1, an dem (Abschnitt) auch die Wägeeinheit 25 gehalten ist, aus in horizontaler oder im Wesentlichen in horizontaler Richtung aus einer während des Füllbetriebes nicht wirksamen Stellung in eine Verschließstellung bewegbar.

Für das Füllen wird die jeweilige Flasche 2 entsprechend dem Pfeil A der Figur 1 in das Füllsystem 1 eingeschoben, sodass sie dann mit ihrem Mündungsflansch 2.2 hängend an dem Behälterträger 4 gehalten ist, und zwar für ein Freistrahlfüllen mit ihrer Flaschenmündung 2.1 mit Abstand unterhalb der von der Gassperre 11 gebildeten Füllgutabgabe oder Mündung des Füllelementes 3.

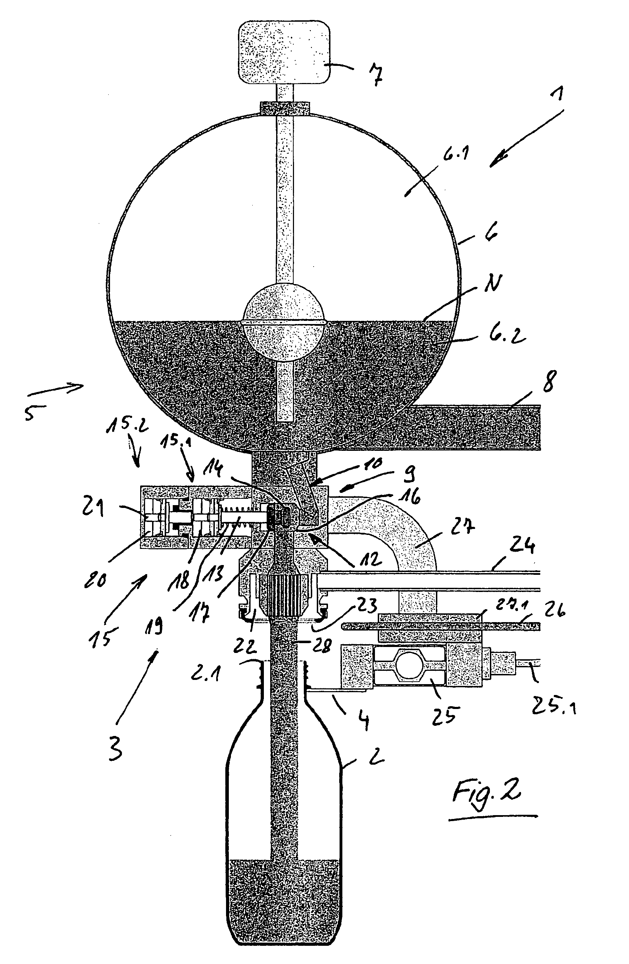

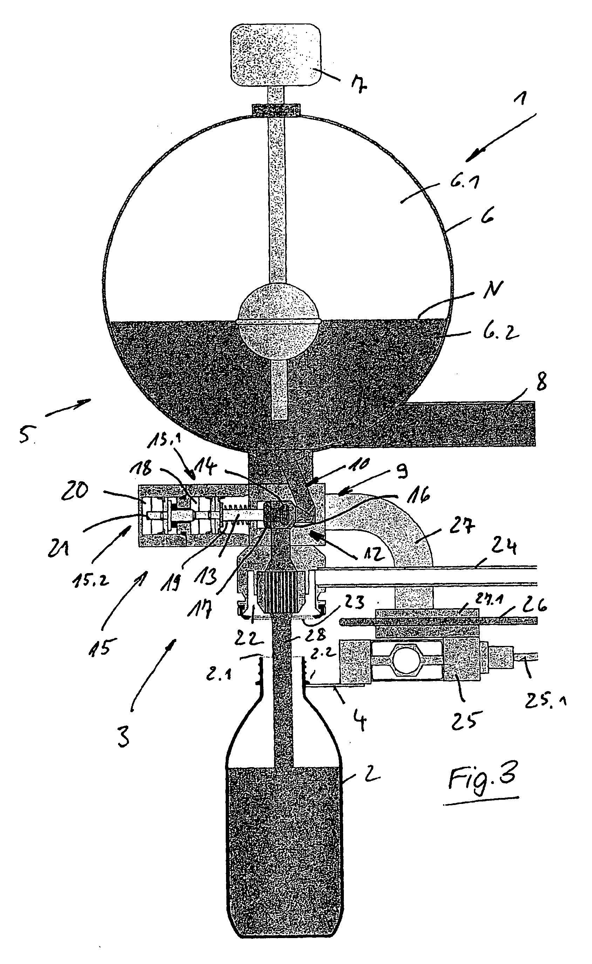

Nach dem Einschieben der Flasche 2 erfolgt entsprechend der Figur 2 zunächst ein Schnellfüllen. Hierfür wird durch Druckentlastung des Zylinderräume 18 und 20 das Flüssigkeitsventil 12 durch die Ventilöffnungsfeder 19 vollständig geöffnet, sodass das flüssige Füllgut als freier Strahl 28 in die Flasche 2 gelangt. Während des Schnellfüllens werden über die Wägeeinheit 25 das Gewicht der Flasche 2 und damit die dieser Flasche zugeführte Füllgutmenge überwacht, und zwar beispielsweise von einem zentralen Rechner der Füllmaschine, dem das von der jeweiligen Wägeeinheit 25 erzeugte Messsignal über die Messleitung 25.1 zugeführt wird. Sobald sich eine vorgegebene Menge an Füllgut in der Flasche 2 befindet, wird veranlasst durch das Messsignal der Wägeeinheit 25 ein langsames Füllen bzw. Langsamfüllen eingeleitet (Figur 3). Hierfür wird bei weiterhin drucklosem Zylinderraum 18 der Zylinderraum 20 mit Druck beaufschlagt, sodass über den Stößel 21 der Ventilstößel 13 gegen die Wirkung der Ventilöffnungsfeder 19 zum teilweisen Schließen des Flüssigkeitsventils 12 bzw. zur Reduzierung des Strömungsquerschnittes des Flüssigkeitsventils 12 bewegt wird. Während des Langsamfüllens wird weiterhin über die Wägeeinheit 25 das Gewicht der Flasche 2 am Behälterträger 4 überwacht. Das Langsamfüllen wird gesteuert durch das Messsignal der Wägeeinheit 25 dann beendet, wenn das Massengewicht der Flasche 2 einem vorgegebenen Sollwert entspricht.

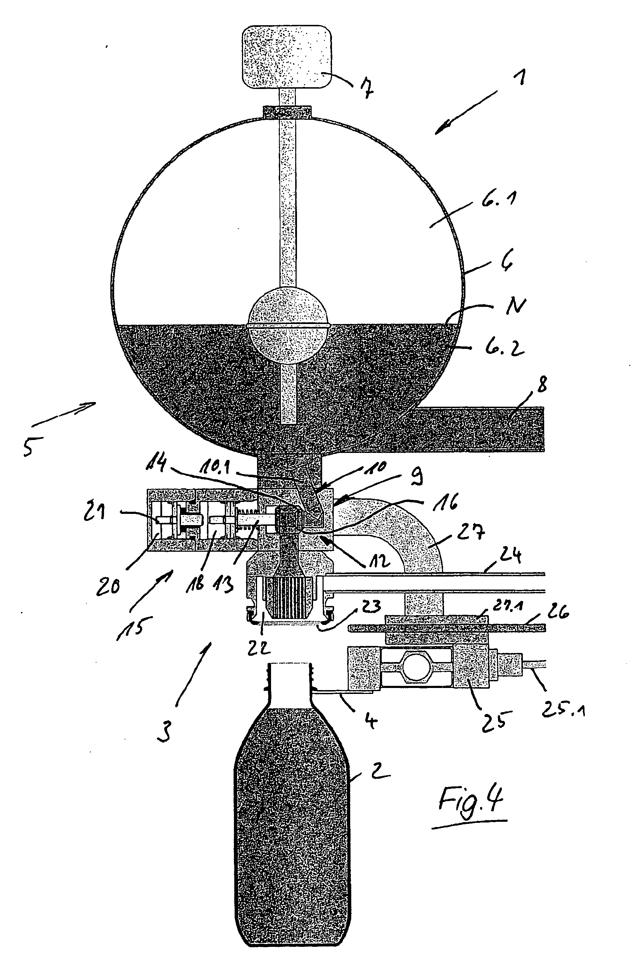

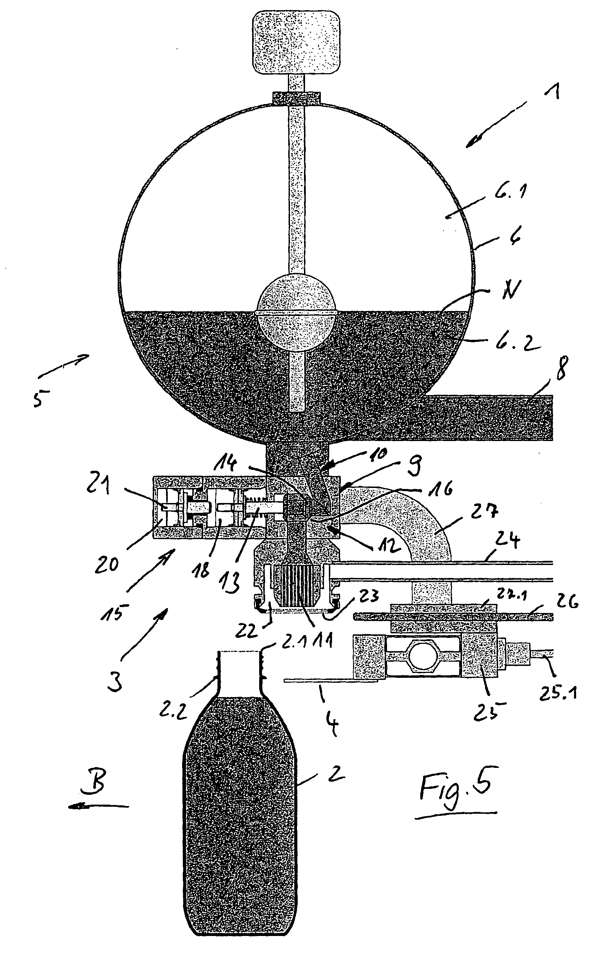

Die Figur 4 zeigt dieses Füllende. Die gefüllte Flasche wird anschließend im Bereich des Flaschenauslaufs der Füllmaschine aus dem Füllsystem 1 ausgeschoben, wie dies in der Figur 5 mit dem Pfeil B angedeutet ist. Durch die Gassperre 11 wird ein Nachtropfen des jeweiligen Füllelementes nach dem Schließen des Flüssigkeitsventils 12 verhindert, obwohl der Kanalabschnitt 10.3 weiterhin mit dem flüssigen Füllgut gefüllt ist.

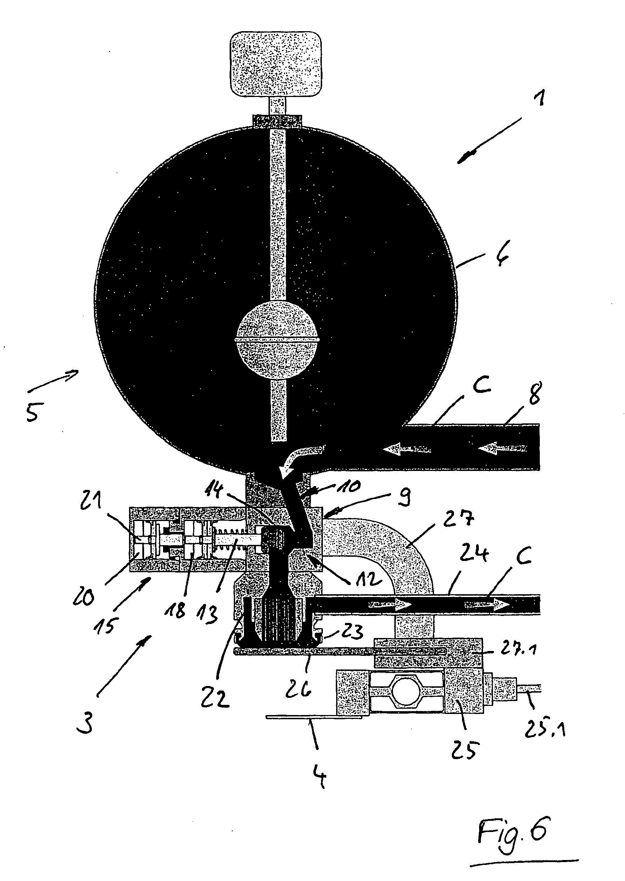

Die Figur 6 zeigt das Füllsystem 1 während einer CIP-Reinigung. Für diese Reinigung ist der Innenraum 22 an der Unterseite des Füllelementes 3 unter Verwendung der Lippendichtung 23 und des gegen diese Lippendichtung anliegende Verschließelementes 26 dicht verschlossen, sodass entsprechend den Pfeilen C der Innenraum des Kessels 6 sowie auch sämtliche Füllelemente 3 einer Füllmaschine an allen kritischen Bereichen von den bei dieser Reinigung verwendeten Reinigungsmedien durchströmt bzw. umströmt werden, und zwar bei geöffneten Flüssigkeitsventilen 12. Die Reinigungsmedien werden dabei beispielsweise über die Leitung 8 in den Kessel 6 geleitet und durchströmen die Flüssigkeitskanäle 10 der geöffneten Füllelemente 3 sowie auch den Innenraum 22 und werden aus diesem Innenraum über die Leitung 24 abgeführt, wobei auf jeden Fall sämtliche mit dem Füllgut beim Füllen in Berührung stehenden Flächen der Flüssigkeitskanäle 10, der Flüssigkeitsventile 12, der Gassperren 11 und der Innenräume 22 mit dem jeweiligen Reinigungsmedium intensiv behandelt werden.

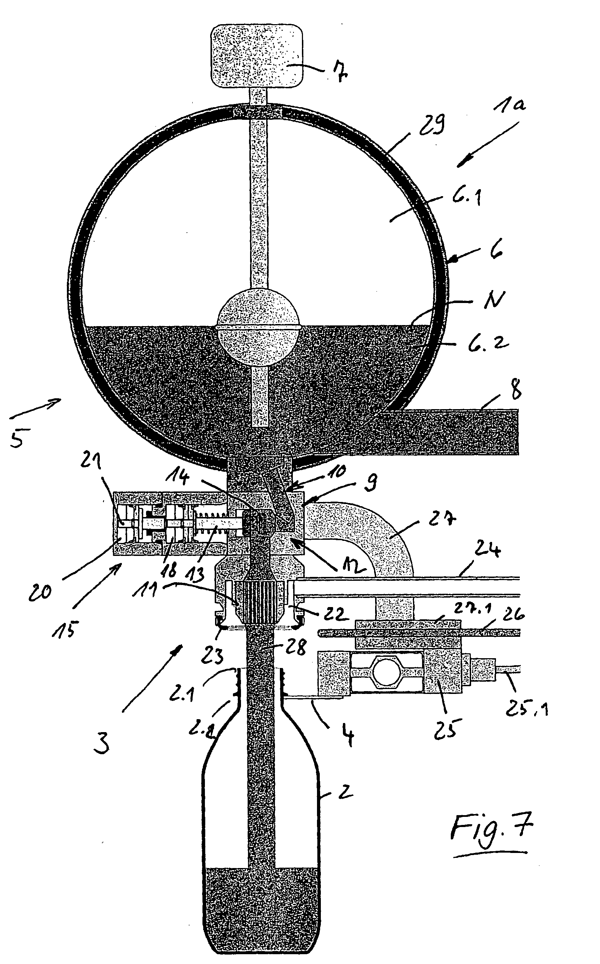

Die Figur 7 zeigt als weitere Ausführungsform ein Füllsystem 1a, welches sich von dem Füllsystem 1 im Wesentlichen nur dadurch unterscheidet, dass für das Heißabfüllen des Füllgutes in die Flaschen 2 der Kessel 6 an seiner Wandung mit einer Wärmeisolierung 29 versehen ist. Dargestellt ist in der Figur 7 der Zustand des Füllsystems 1a bei, für ein Schnellfüllen, vollständig geöffnetem Flüssigkeitsventil 12.

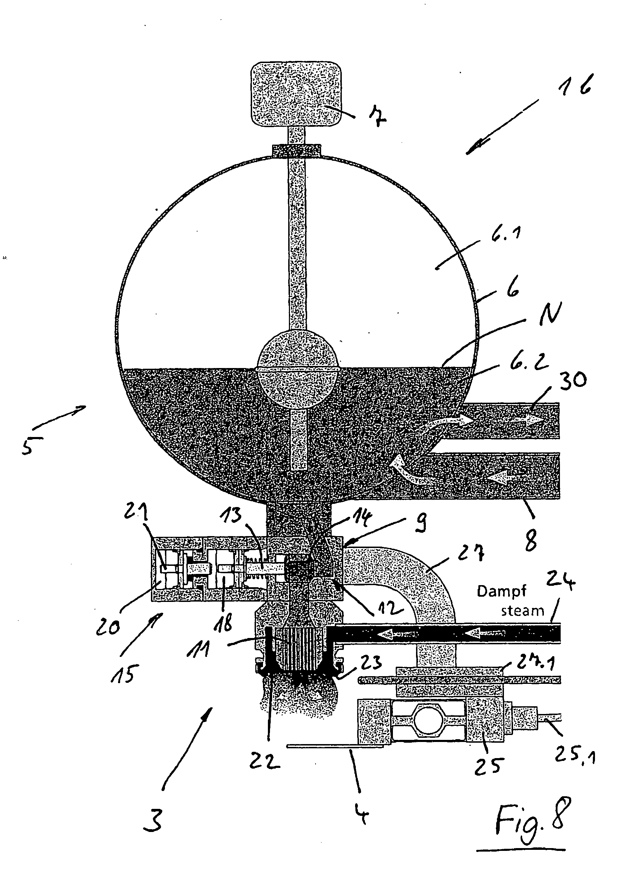

Die Figur 8 zeigt als weitere Ausführungsform ein Füllsystem 1 b, welches sich von dem Füllsystem 1 im Wesentlichen dadurch unterscheidet, dass zusätzliche zu der Leitung 8 eine ebenfalls in den Kessel 6 bzw. in den dortigen Flüssigkeitsraum 6.2 mündende Leitung 30 vorgesehen ist. Bei dieser Ausführungsform, die wiederum für das Heißabfüllen ausgebildet ist, wird dem Kessel 6 über die Leitung 8 ständig von einer nicht dargestellten Heizeinrichtung erhitztes Füllgut zugeführt und über die Leitung 30 Füllgut aus dem Kessel 6 an die Heizeinrichtung zurückgeführt. Das Zuführen des Füllgutes über die Leitung 8 ist selbstverständlich so gesteuert, dass auch während des Füllbetriebes durch zusätzliches Füllgut das erforderliche Niveau N des Füllgutspiegels im Kessel 6 eingehalten wird.

Gleichzeitig ist bei dieser Ausführungsform auch vorgesehen, dass jeweilige Füllelement 3 mit Wasserdampf zu beaufschlagen, der über die Leitung 24 in den Innenraum 22 eingebracht wird und an der unteren Öffnung dieses Innenraumes austritt. Die Beaufschlagung mit Wasserdampf erfolgt dabei bevorzugt während der Füllpausen, d.h. nach dem Ausschieben einer gefüllten Flasche 2 und vor dem Einschieben einer neuen, zu füllenden Flasche 2. Durch den Wasserdampf erfolgt insbesondere eine Beheizung des Füllelementes 3 und auch der in dem Flüssigkeitskanal 10 zurückgehaltenen Füllgutmenge, sodass bereits am Beginn jeder neuen Füllphase bzw. jedes neuen Füllens, d.h. beispielsweise am Beginn des Schnellfüllens ausschließlich Füllgut mit der erforderlichen hohen Temperatur in die jeweilige Flasche 2 gelangt.

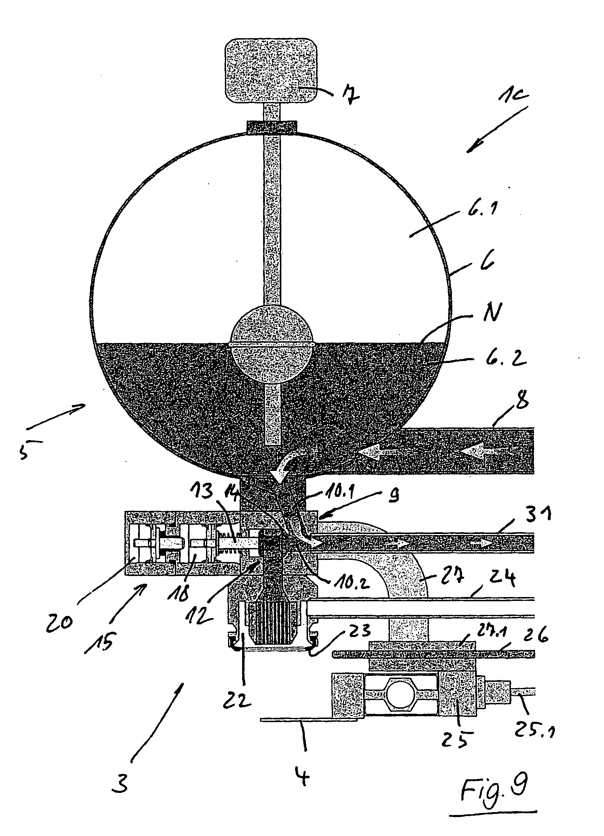

Die Figur 9 zeigt als weitere Ausführungsform ein Füllsystem 1 c, welches sich von dem Füllsystem 1 b im Wesentlichen dadurch unterscheidet, dass anstelle der Leitung 30 eine an jedes Füllelement 3 führenden Leitung 31 vorgesehen ist, die in den Flüssigkeitskanal 10 vor dem Flüssigkeitsventil 12 mündet, und zwar bei der dargestellten Ausführungsform in den Übergang zwischen den Flüssigkeitskanalabschnitten 10.1 und 10.2. Auch bei dieser Ausführungsform wird zur Aufrechterhaltung der für ein Heißabfüllen erforderlichen Füllguttemperatur dem Kessel 6 das Füllgut über die Leitung 8 ständig von einer nicht dargestellten Heizeinrichtung zugeführt und unter Durchströmen eines Teils des Flüssigkeitskanals, nämlich der Flüssigkeitskanalabschnitte 10.1 und 10.2 jedes Füllelementes 3 über die Leitung 31 an die Heizeinrichtung zurückgeführt. Bei dieser Ausführungsform wird somit nicht nur das Füllgut im Kessel 6 auf der erforderlichen Temperatur gehalten, sondern über das Füllgut erfolgt auch ein Warmhalten der Füllelemente 3. Selbstverständlich besteht bei dem Füllsystem 1 c ebenfalls die Möglichkeit einer zusätzlichen Dampfbeaufschlagung der Füllelemente 3 während der Füllpausen über die Leitung 24.

Ist das Füllsystem 1 c Bestandteil einer Füllmaschine mit mehreren Füllelementen 3, so wird bevorzugt durch eine zentral für sämtliche Füllelemente 3 vorgesehene Ventilanordnung im Rücklauf, d.h. in einer gemeinsamen Verbindung der Leitungen 31 mit der Heizeinrichtung, der Umlauf des heißen Füllgutes für sämtliche Füllelemente 3 gesteuert, und zwar so, dass dieser Umlauf bei geschlossenem Flüssigkeitsventilen 12 der Füllelemente 3 aktiviert wird.

Die Erfindung wurde voranstehend an Ausführungsbeispielen beschrieben. Sämtlichen Ausführungsformen ist gemeinsam, dass das Füllen der Flaschen 2 jeweils mengen- bzw. gewichtgesteuert durch die Wägeeinheiten 25 erfolgt. Weiterhin ist allen beschriebenen Ausführungsformen gemeinsam, dass das Einbringen des flüssigen Füllgutes in die Flaschen 2 durch Freistrahlfüllen erfolgt. Weiterhin ist allen beschriebenen Ausführungsformen gemeinsam, dass die Flüssigkeitsventile 12 mit ihren Ventilstößeln 13 in horizontaler Richtung oder im Wesentlichen in horizontaler Richtung und dabei auch radial oder im Wesentlichen radial zur vertikalen Maschinenachse der die Füllelemente 3 aufweisenden Füllmaschine angeordnet sind. Durch diese Anordnung des Ventilstößels 13 sowie auch durch den schrägen Verlauf des Kanalabschnitts 10.1 ergibt sich eine sehr kompakte Bauform für die Füllelemente 3 mit reduzierter Oberfläche und mit geringer Wärmeabstrahlung an die Umgebung. Allen beschriebenen Ausführungsformen ist weiterhin gemeinsam, dass durch die Betätigungselemente 15.1 und 15.2 der Betätigungseinrichtungen 15 ein Schnellfüllen sowie ein Langsamfüllen möglich sind. Weiterhin ist allen beschriebenen Ausführungsformen auch gemeinsam, dass eine CIP-Reinigung vereinfacht durchgeführt werden kann.

Durch die Befestigung der Wägeeinheit 25 über das Tragelement 27 an dem Füllelementgehäuse 9 bilden das Füllelement 3, das ein- und ausfahrbare Verschließelement 26, die Wägeeinheit 25 und der Behälterträger 4 eine komplette und kompakte Baueinheit, die als solche direkt am Kessel 6 befestigt ist und z.B. bei einem Defekt als komplette Baueinheit ausgetauscht werden kann.

Die Erfindung wurde voranstehend an Ausführungsbeispielen beschrieben.

### Bezugszeichenliste

- 1, 1a, 1b, 1c: Füllsystem
- 2: Flasche
- 2.1: Flaschenmündung
- 2.2: Mündungsflansch
- 3: Füllelement
- 4: Behälterträger
- 5: Rotor
- 6: Kessel
- 7: Füllstandsensor
- 7.1: Schwimmer
- 8: Leitung
- 9: Füllelementgehäuse
- 9.1, 9.2: Gehäuseabschnitt
- 10: Flüssigkeitskanal
- 10.1, 10.2, 10.3: Flüssigkeitskanalabschnitt
- 11: Gassperre
- 12: Flüssigkeitsventil
- 13: Ventilstößel
- 14: Ventilkörper
- 15: Betätigungseinrichtung
- 15.1, 15.2: Betätigungselement
- 16: Ventilsitz
- 17: kolbenartiger Abschnitt auf Ventilstößel 13
- 18: Zylinderraum
- 19: Ventilöffnungsfeder
- 20: Zylinderraum
- 21: Stößel
- 22: Innenraum des Gehäuseabschnitts 9.2
- 23: Lippendichtung
- 24: Leitung
- 25: Wägeeinheit
- 25.1: Messleitung
- 26: Verschließelement
- 27: Tragarm
- 27.1: Tragarmabschnitt
- 28: freier Strahl
- 29: Wärmeisolierung
- 30, 31: Leitung
- A: Bewegungsrichtung beim Aufschieben einer Flasche
- B: Bewegungsrichtung beim Ausschieben der gefüllten Flasche 2
- C: Strömungsrichtung des Reinigungsmediums bei der CIP-Reinigung

## Patentansprüche

1. Füllsystem für ein Heißabfüllen eines flüssigen Füllgutes in Flaschen oder dergleichen Behälter (2), mit einem Füllelement (3) mit einem in einem Füllelementgehäuse (9) ausgebildeten Flüssigkeitskanal (10), der mit einem Kessel (6) für das heiße Füllgut in Verbindung steht sowie an einer Unterseite des Füllelementes (3) eine Füllgutabgabe (11) bildet, über die das flüssige Füllgut dem jeweils zu füllenden, an einem Behälterträger (4) gehaltenen Behälter (2) zufließt, mit einem im Flüssigkeitskanal (10) angeordneten Flüssigkeitsventil (12) sowie mit einer Messeinrichtung zur Steuerung des Flüssigkeitsventils (12) in Abhängigkeit von der in den jeweiligen Behälter beim Füllen eingebrachten Füllgutmenge, wobei der Sensor eine Wägezelle oder eine Wägeeinheit (25) zur Erfassung des Massengewichtes des jeweiligen am Behälterträger (4) vorgesehenen Behälters (2) ist, **dadurch gekennzeichnet, dass** die Wägeeinheit (25) am Füllelement (3) oder am Füllelementgehäuse gehalten ist.

2. Füllsystem nach Anspruch 1, **dadurch gekennzeichnet, dass** der Behälterträger (4) an der Wägeeinheit (25) befestigt ist.

3. Füllsystem nach einem der vorhergehenden Ansprüche, **dadurch gekennzeichnet, dass** das Füllelement, die Wägeeinheit und der Behälterträger eine komplette Baueinheit bilden, die als solche beispielsweise an einem, das flüssige Füllgut aufnehmenden Kessel (6) einer Füllmaschine befestigt und demontierbar ist.

4. Füllsystem nach einem der vorhergehenden Ansprüche, **gekennzeichnet durch** seine Ausbildung für ein Freistrahlfüllen der Behälter (2) mit dem flüssigen Füllgut.

5. Füllsystem nach einem der vorhergehenden Ansprüche, **gekennzeichnet durch** seine Ausbildung zum Füllen der Behälter (2) unter geostatischem Flüssigkeitsdruck entsprechend der Höhendifferenz zwischen dem Niveau des Füllgutspiegels im Kessel (6) und der Füllgutabgabe (11).

6. Füllsystem nach einem der vorhergehenden Ansprüche, **gekennzeichnet durch** eine Gassperre (11), die die Füllgutabgabe bildet oder Im Bereich der Füllgutabgabe vorgesehen ist.

7. Füllsystem nach einem der vorhergehenden Ansprüche, **gekennzeichnet durch** Mittel zum Warmhalten bzw. Erhitzen des flüssigen Füllgutes im Kessel (6) und/oder des Füllelementes (3).

8. Füllsystem nach Anspruch 7, **dadurch gekennzeichnet, dass** zum Warmhalten bzw. Erhitzen des Füllgutes im Kessel (6) dieser Bestandteil eines eine Heizeinrichtung aufweisenden Füllgutkreislaufs ist.

9. Füllsystem nach Anspruch 8, **gekennzeichnet durch** wenigstens eine Verbindung oder Leitung (8, 30; 10, 31) zum Zuführen des Füllgutes in den Kessel (6) sowie zum Rückführen des Füllgutes aus dem Kessel (6) an die Heizeinrichtung.

10. Füllsystem nach Anspruch 9, **dadurch gekennzeichnet, dass** die wenigstens eine Verbindung oder Leitung zum Rückführen des Füllgutes an die Heizeinrichtung von wenigstens einer in den Kessel mündenden Leitung (30) gebildet ist.

11. Füllsystem nach Anspruch 9, **dadurch gekennzeichnet, dass** die wenigstens eine Verbindung oder Leitung zum Rückführen des Füllgutes an die Heizeinrichtung teüweise von einem in dem jeweiligen Füllelement (3) ausgebildeten Kanal, beispielsweise von wenigstens einem Abschnitt (10.1,10.2) des Flüssigkeitskanals (10) gebildet ist.

12. Füllsystem nach einem der vorhergehenden Ansprüche, **gekennzeichnet durch** Mittel zum Erwärmen und/oder Warmhalten des Füllelementes (3) **durch** ein warmes oder heißes flüssiges und/oder gasförmiges und/oder dampfförmiges Medium.

13. Füllsystem nach Anspruch 12, **gekennzeichnet durch** eine Leitung (24), über die das Gehäuse (9) des Füllelementes (3), insbesondere ein die Füllgutabgabe (11) aufweisender Gehäuseabschnitt (9.2) mit dem heißen gas- und/oder dampfförmigen Medium beaufschlagbar ist.

14. Füllsystem nach Anspruch 13, **dadurch gekennzeichnet, dass** der Gehäuseabschnitt (9.2) glockenartig mit einer zur Unterseite des Füllelementes (3) bzw. zum Behältertrager (4) hin offenen Innenraum (22) ausgebildet ist, in welchem ein die Füllgutabgabe (11) bildender Teil des Gehäuses (9) aufgenommen ist und in welchen die Leitung (24) zum Zuführen des heißen gas- und/oder dampfförmigen Mediums mündet.

15. Füllsystem nach Anspruch 12, **dadurch gekennzeichnet, dass** die Mittel zum Erwärmen und Warmhalten des Füllelementes (3) von wenigstens einem von dem heißen Medium durchströmten Kanal, beispielsweise von wenigstens einem von dem heißen Füllgut durchströmten Kanal oder Abschnitt (10.1, 10.2) des Flüssigkeitskanals (10) gebildet sind.

16. Füllsystem nach Anspruch 15, **dadurch gekennzeichnet, dass** der im Gehäuse (9) des Follelementes (3) ausgebildete und für das Erwärmen bzw. Warmhalten des Füllelementes von dem heißen Füllgut durchströmte Kanal (10.1, 10.2) Teil des den Kessel (6) sowie die Heizeinrichtung einschließenden Füllgutkreislaufs ist.

17. Füllsystem nach Anspruch 13, dass bei einer Füllmaschine mit mehreren Füllelementen (3), das heiße, die Füllelemente durchströmende Medium, beispielsweise das heiße, den wenigstens einen Abschnitt (10.1, 10.2) des Flüssigkeitskanals (10) des jeweiligen Füllelementes (3) durchströmende Füllgut für jedes Füllelement (3) Individuell steuerbar ist.

18. Füllsystem nach Anspruch 13, dass bei einer Füllmaschine mit mehreren Füllelementen (3), das heiße, die Füllelemente durchströmende Medium, beispielsweise das heiße, den wenigstens einen Abschnitt (10.1, 10.2) des Flüssigkeitskanals (10) des jeweiligen Füllelementes (3) durchströmende Füllgut für sämtliche Füllelemente oder eine Gruppe von mehreren Füllelementen (3) gemeinsam steuerbar ist.

19. Füllelement nach Anspruch 17 oder 18, **gekennzeichnet durch** wenigstens ein Steuerventil in einer das heiße Medium an das wenigstens eine Füllelement (3) leitenden Verbindung, beispielsweise in dem die Heizeinrichtung einschließenden Füllgutkreislauf.

20. Füllsystem nach einem der vorhergehenden Ansprüche, **dadurch gekennzeichnet, dass** das Flüssigkeitsventil (12) wenigstens einen Ventilkörper (14) aufweist, der zum Öffnen und Schließen des Flüssigkeitsventils (12) in einer horizontalen oder im Wesentlichen horizontalen Achsrichtung bewegbar ist.

21. Füllsystem nach einem der vorhergehenden Ansprüche, **gekennzeichnet durch** ein Verschließelement (26), mit welchem ein die Füllgutabgabe (11) aufweisender Innenraum (22) für eine CIP-Reinigung dicht verschließbar ist, wobei das Verschließelement beispielsweise auch Bestandteil der das Füllelement, die Wägeeinheit und den Behälterträger aufweisenden Baueinheit ist.

22. Füllsystem nach einem der vorhergehenden Ansprüche, **dadurch gekennzeichnet, dass** der Behälterträger (4) für eine hängende Halterung der Behälter (2) an einem Mündungsflansch (2.2) ausgebildet ist.

23. Füllsystem nach einem der vorhergehenden Ansprüche, **dadurch gekennzeichnet, dass** es Bestandteil einer Füllmaschine umlaufender Bauart mit einer Vielzahl von an einem Rotor (5) vorgesehenen Füllelementen (3) und zugehörigen Behälterträgern (4) ist.

24. Füllsystem nach Anspruch 23, **dadurch gekennzeichnet, dass** jedem Behälterträger der Füllmaschine jeweils wenigstens eine eigenständige Wägezelle oder eine eigenständige Wägeeinheit (25) zugeordnet ist.

## Claims

1. Filling system for the hot-filling of a liquid product into bottles or similar containers (2), comprising a filling element (3) with a liquid channel (10) configured in a filling element housing (9), wherein said channel communicates with a bowl (6) for the hot product and forms a product dispenser (11) on a lower side of the filling element (3), via which the liquid product flows towards the container (2) to be filled in each case, said container being held on a container support (4), with a liquid valve (12) arranged in the liquid channel (10) and with a measuring device to control the liquid valve (12) depending on the quantity of product introduced into the particular container during the filling, wherein the sensor is a weighing cell or a weighing unit (25) to capture the mass weight of the particular container (2) provided on the container support (4), **characterised in that** the weighing unit (25) is held on the filling element (3) or on the filling element housing.

2. Filling system according to claim 1, **characterised in that** the container support (4) is attached on the weighing unit (25).

3. Filling system according to any one of the preceding claims, **characterised in that** the filling element, the weighing unit and the container support form a complete modular unit which as such can be affixed to and removed from for example a bowl (6) of a filling machine holding the liquid product.

4. Filling system according to any one of the preceding claims, **characterised by** its design for a free-jet filling of the containers (2) with the liquid product.

5. Filling system according to any one of the preceding claims, **characterised by** its design for filling containers (2) under geostatic liquid pressure corresponding to the height difference between the level of the product in the bowl (6) and the product dispenser (11).

6. Filling system according to any one of the preceding claims, **characterised by** a gas barrier (11) which forms the product dispenser or is provided in the area of the product dispenser.

7. Filling system according to any one of the preceding claims, **characterised by** means for keeping hot or heating the liquid product in the bowl (6) and / or the filling element (3).

8. Filling system according to claim 7, **characterised in that**, to keep the product in the bowl (6) hot or to heat it, it is part of a product circuit which has a heating device.

9. Filling system according to claim 8, **characterised by** at least one connection or line (8, 30; 10, 31) for supplying the product into the bowl (6) and for returning the product from the bowl (6) to the heating device.

10. Filling system according to claim 9, **characterised in that**, the at least one connection or line to return the product to the heating device is formed by at least one line (30) opening into the bowl.

11. Filling system according to claim 9, **characterised in that**, the at least one connection or line to return the product to the heating device is formed partially by a channel formed in the particular filling element (3), for example by at least one section (10.1, 10.2) of the liquid channel (10).

12. Filling system according to any one of the preceding claims, **characterised by** means to heat the filling element (3) or to keep it hot by a warm or hot medium in the form of a liquid and / or gas and / or vapour.

13. Filling system according to claim 12, **characterised by** a line (24) by means of which the housing (9) of the filling element (3), in particular a housing section (9.2) having the product dispenser (11), which can be exposed to the hot medium in the form of a gas and / or vapour.

14. Filling system according to claim 13, **characterised in that** the housing section (9.2) is designed like a bell with an interior space (22) open to the lower side of the filling element (3) or to the container support (4), in which a part of the housing (9) forming the product dispenser (11) is held and into which the line (24) for supplying the hot medium in the form of a gas and / or vapour opens.

15. Filling system according to claim 12, **characterised in that** the means for heating the filling element (3) and keeping it warm are formed by at least one channel, through which the hot medium flows, for example by at least one channel or section (10.1, 10.2) of the liquid channel (10) through which the hot product flows.

16. Filling system according to claim 15, **characterised in that** the channel (10.1, 10.2) formed in the housing (9) of the filling element (3) and through which the hot product flows to heat the filling element or to keep it warm, is part of the product circuit including the bowl (6) and the heating device.

17. Filling machine according to claim 13, **characterised in that** in a filling machine with a plurality of filling elements (3), the hot medium flowing through the filling element, for example the hot product flowing through the at least one section (10.1, 10.2) of the liquid channel (10) of the particular filling element (3) can be controlled individually for each filling element (3).

18. Filling machine according to claim 13, **characterised in that** in a filling machine with a plurality of filling elements (3), the hot medium flowing through the filling element, for example the hot product flowing through the at least one section (10.1, 10.2) of the liquid channel (10) of the particular filling element (3) can be controlled jointly for all the filling elements or a group of a plurality of filling elements (3).

19. Filling element according to claim 17 or 18, **characterised by** at least one control valve in a connection conveying the hot medium to the at least one filling element (3), for example in the product circuit containing the heating device.

20. Filling system according to any one of the preceding claims, **characterised in that** the liquid valve (12) has at least one valve body (14), which can be moved in a horizontal or substantially horizontal axial direction to open and closed the liquid valve (12).

21. Filling system according to any one of the preceding claims, **characterised by** a closing element (26), with which an interior space (22) holding the product dispenser (11) can be sealed for CIP cleaning, wherein the closing element is for example also part of the modular unit comprising the filling element, the weighing unit and the container support.

22. Filling system according to any one of the preceding claims, **characterised in that** the container carrier (4) is formed on an opening flange (2.2) for a suspended holding of the containers (2).

23. Filling system according to any one of the preceding claims, **characterised in that** it is part of a filling machine of a circulating design with a multiplicity of filling elements (3) provided on a rotor (5) and associated container supports (4).

24. Filling system according to claim 23, **characterised in that** in each case at least one independent weighing cell or one independent weighing unit (25) is allocated to each container support of the filling machine.

## Revendications

1. Système de remplissage pour un remplissage à chaud d'un produit de remplissage liquide dans des bouteilles ou des récipients (2) similaires, comprenant un élément de remplissage (3) ayant une conduite de liquide (10) réalisée dans un logement de l'élément de remplissage (9) qui est en liaison avec une cuve (6) pour le produit de remplissage chaud et forme, sur un côté inférieur de l'élément de remplissage (3), une décharge de produit de remplissage (11) par laquelle le produit de remplissage liquide arrive au récipient (2) devant respectivement être rempli, maintenu dans un support de récipient (4), comprenant une vanne de liquide (12) agencée dans la conduite de liquide (10) et comprenant un dispositif de mesure pour commander la vanne de liquide (12) en fonction de la quantité de produit de remplissage introduite dans le récipient respectif lors du remplissage, étant entendu que le capteur est une cellule de pesage ou une unité de pesage (25) destinée à calculer le poids du récipient (2) respectif prévu dans le support de récipient (4), **caractérisé en ce que** l'unité de pesage (25) est maintenue au niveau de l'élément de remplissage (3) ou du logement de l'élément de remplissage.

2. Système de remplissage selon la revendication 1, **caractérisé en ce que** le support de récipient (4) est fixé à l'unité de pesage (25).

3. Système de remplissage selon l'une des revendications précédentes, **caractérisé en ce que** l'élément de remplissage, l'unité de pesage et le support de récipient forment une unité de construction complète, qui est fixée et peut être démontée en tant que telle, par exemple, sur une cuve (6) d'une machine de remplissage contenant le produit de remplissage liquide.

4. Système de remplissage selon l'une des revendications précédentes, **caractérisé par** sa réalisation pour un remplissage à jet libre des récipients (2) avec le produit de remplissage liquide.

5. Système de remplissage selon l'une des revendications précédentes, **caractérisé par** sa réalisation visant à remplir les récipients (2) sous la pression de liquide géostatique correspondant à la différence de hauteur entre le niveau du produit de remplissage dans la cuve (6) et la décharge de produit de remplissage (11).

6. Système de remplissage selon l'une des revendications précédentes, **caractérisé par** un écran d'étanchéité au gaz (11) qui constitue la décharge de produit de remplissage ou qui est prévu dans la zone de la décharge de produit de remplissage.

7. Système de remplissage selon l'une des revendications précédentes, **caractérisé par** des moyens visant à garder chaud ou à chauffer le produit de remplissage liquide dans la cuve (6) et/ou l'élément de remplissage (3).

8. Système de remplissage selon la revendication 7, **caractérisé en ce qu'**en vue de garder chaud ou de chauffer le produit de remplissage dans la cuve (6), celle-ci fait partie intégrante d'un circuit de produit de remplissage présentant un dispositif de chauffe.

9. Système de remplissage selon la revendication 8, **caractérisé par** au moins une liaison ou conduite (8, 30 ; 10, 31) destinée à amener le produit de remplissage dans la cuve (6) ainsi qu'à ramener le produit de remplissage de la cuve (6) au dispositif de chauffe.

10. Système de remplissage selon la revendication 9, **caractérisé en ce que** l'au moins une liaison ou conduite destinée à ramener le produit de remplissage au dispositif de chauffe est constituée par au moins une conduite (30) débouchant dans la cuve.

11. Système de remplissage selon la revendication 9, **caractérisé en ce que** l'au moins une liaison ou conduite destinée à ramener le produit de remplissage au dispositif de chauffe est constituée en partie par un canal formé dans l'élément de remplissage (3) respectif, par exemple par au moins un tronçon (10.1, 10.2) de la conduite de liquide (10).

12. Système de remplissage selon l'une des revendications précédentes, **caractérisé par** des moyens visant à chauffer et/ou à garder chaud l'élément de remplissage (3) à l'aide d'une substance liquide et/ou sous forme de gaz et/ou sous forme de vapeur chaude.

13. Système de remplissage selon la revendication 12, **caractérisé par** une conduite (24) par le biais de laquelle le logement (9) de l'élément de remplissage (3), en particulier un tronçon du logement (9.2) présentant la décharge de produit de remplissage (11), peut être exposé à la substance sous forme de gaz et/ou de vapeur chaude.

14. Système de remplissage selon la revendication 13, **caractérisé en ce que** le tronçon du logement (9.2) est réalisé en forme de cloche avec un espace intérieur (22) ouvert en direction du côté inférieur de l'élément de remplissage (3) ou du support de récipient (4), dans lequel se trouve une partie du logement (9) formant la décharge de produit de remplissage (11) et dans lequel débouche la conduite (24) destinée à amener la substance sous forme de gaz et/ou de vapeur chaude.

15. Système de remplissage selon la revendication 12, **caractérisé en ce que** les moyens destinés à chauffer et à garder chaud l'élément de remplissage (3) sont constitués par au moins un canal dans lequel circule la substance chaude, par exemple par au moins un canal ou tronçon (10.1, 10.2) de la conduite de liquide (10) dans lequel circule le produit de remplissage chaud.

16. Système de remplissage selon la revendication 15, **caractérisé en ce que** le canal (10.1, 10.2) réalisé dans le logement (9) de l'élément de remplissage (3) et dans lequel circule le produit de remplissage chaud pour chauffer ou garder chaud l'élément de remplissage fait partie du circuit de produit de remplissage incluant la cuve (6) ainsi que le dispositif de chauffe.

17. Système de remplissage selon la revendication 13, **caractérisé en ce que** dans une machine de remplissage comprenant plusieurs éléments de remplissage (3), la substance chaude circulant dans les éléments de remplissage, par exemple le produit de remplissage chaud circulant dans l'au moins un tronçon (10.1, 10.2) de la conduite de liquide (10) de l'élément de remplissage (3) respectif, peut être commandée individuellement pour chaque élément de remplissage (3).

18. Système de remplissage selon la revendication 13, **caractérisé en ce que** dans une machine de remplissage comprenant plusieurs éléments de remplissage (3), la substance chaude circulant dans les éléments de remplissage, par exemple le produit de remplissage chaud circulant dans l'au moins un tronçon (10.1, 10.2) de la conduite de liquide (10) de l'élément de remplissage (3) respectif, peut être commandée de façon commune pour l'ensemble des éléments de remplissage ou pour un groupe de plusieurs éléments de remplissage (3).

19. Élément de remplissage selon la revendication 17 ou 18, **caractérisé par** au moins une vanne de commande dans une liaison amenant la substance chaude à l'au moins un élément de remplissage (3), par exemple dans le circuit de produit de remplissage incluant le dispositif de chauffe.

20. Système de remplissage selon l'une des revendications précédentes, **caractérisé en ce que** la vanne de liquide (12) présente au moins un corps de valve (14) qui peut être déplacé dans une direction axiale horizontale ou sensiblement horizontale en vue de l'ouverture et de la fermeture de la vanne de liquide (12).

21. Système de remplissage selon l'une des revendications précédentes, **caractérisé par** un élément de fermeture (26) avec lequel un espace intérieur (22) présentant la décharge de produit de remplissage (11) peut être fermé de façon étanche pour un nettoyage CIP, étant entendu que l'élément de fermeture fait également partie intégrante, par exemple, de l'unité de construction présentant l'élément de remplissage, l'unité de pesage et le support de récipient.

22. Système de remplissage selon l'une des revendications précédentes, **caractérisé en ce que** le support de récipient (4) est réalisé pour une prise des récipients (2) en suspension par une collerette de l'embouchure (2.2).

23. Système de remplissage selon l'une des revendications précédentes, **caractérisé en ce qu'**il fait partie intégrante d'une machine de remplissage d'un type de construction en carrousel comprenant une pluralité d'éléments de remplissage (3) prévus sur un rotor (5) et de supports de récipients (4) s'y rapportant.

24. Système de remplissage selon la revendication 23, **caractérisé en ce qu'**au moins une cellule de pesage indépendante ou une unité de pesage indépendante (25) est adjointe respectivement à chaque support de récipient de la machine de remplissage.
